# EUROPEAN PATENT APPLICATION

(11) **EP 3 415 797 A1**
(43) Date of publication of application: **19.12.2018**
(21) Application number: 17175543.2
(22) Date of filing: 12.06.2017
(51) Int. Cl.: F16J 15/34

(54) **DYNAMIC MECHANICAL SEAL ASSEMBLY**

(71) Applicant: Huhnseal AB, 261 23 Landskrona (SE)
(72) Inventor: FICORILLI, Daniele, 25222 Helsingborg (SE)
(74) Representative: KIPA AB

(57) **Abstract**

The invention relates to a dynamic mechanical seal assembly (100) comprising a rotating seal ring and a static seal ring (106), arranged for mutual sealing abutment in a common sealing plane (110). The invention is especially characterized in that at least one of said rotating sealing ring (105) and static sealing ring (106) comprises a base body (130) of a cemented tungsten carbide material having a crystalline diamond coating (120) facing said common sealing plane (110).

## Description

### TECHNICAL FIELD

The present disclosure relates to a dynamic mechanical seal assembly comprising a rotating seal ring and a static seal ring, arranged for mutual sealing abutment in a common sealing plane. At least one of the rotating sealing ring and static sealing ring is coated with a low friction wear coating.

### BACKGROUND

Low friction wear coatings are commonly used in areas such as cutting tools. For this purpose, diamond coatings on non-diamond surfaces have become common since the developments of advanced chemical vapour deposition (CVD) coating techniques during the last decades. In particular, diamond coatings are utilized in various tooling applications, such as high end cutting inserts and drills. Properly synthesized diamond coatings are highly resistant to chemical- and abrasive wear. These useful properties, in combination with the production cost having come down to an acceptable level have made diamond coatings, at least in theory, ideal as the wear resistance layer in a wide range of applications. However, adhesion to the base material is an issue with some of the most interesting hard materials, such as cemented hard materials comprising tungsten carbide and cobalt as the binder material. Also the diamond coating itself may have different properties effecting the wear resistance, the properties primarily reflecting the degree of crystallinity of the diamond coating ranging from essentially pure crystalline, also referred to SP3 diamond coating, to amorphous diamond, also referred DiamondLike-Coating (DLC) or SP2 diamond coating. Articles, typically tools or wear parts, provided with a diamond coating typically consists of a hard base material, one or more binder layers and the diamond coating. The hard base material typically comprises carbides such as tungsten carbides (WC), silicon carbides (SiC), molybdenum carbides (MoC; Mo2C) titanium carbide (TiC), or tantalum carbide (TaC) combined with a binder material, most commonly comprising nickel (Ni) or cobalt (Co), but binders may also comprise for example iron (Fe) and chromium (Cr). A variety of names are used for the base material, for example cemented carbides, hard materials, carbide-binder-matrix etc. In order to increase the adhesion of the coating, binder layers are often introduced between the base body and the coating. A wide range of binder layers are in use, or has been tested, the binder layers typically comprising niobium (Nb), Tantalum or chromium (Cr). Nitrides of these elements are often utilized as a binder layer. The diamond coating is typically provided as the outermost layer on the article. The thickness of the diamond coating is typically in the range 1-30 µm and is commonly optimized for the application.

It is well known in the art that certain combinations of carbides, binders and coatings are more challenging than others. In particular the combination of tungsten carbide with a cobalt based binder and crystalline diamond coating has received considerable attention. Problems with adhesion of the diamond coating and long term durability are ascribed to interfacial graphitization induced by the binder phase and thermal expansion mismatch of diamond and WC-Co.

*"*Chemically vapour deposited diamond coatings on cemented tungsten carbides: Substrate pre-treatments, adhesion and cutting performance" by Riccardo Polini, Thin Solid Films 515 (2006) 4 - 13, addresses the problems relating to tools and wear parts. It is suggested that the base material is pre-treated to reduce the Co content close to the interface with the diamond coating to increase the adhesion.

A dynamic mechanical seal is the main part in a sealing assembly for containing fluid, or gas, within a vessel, typically pumps, mixers, etc. where a rotating shaft passes through a stationary housing or occasionally, where the housing rotates around the shaft. For the most demanding applications, dynamic mechanical seal surfaces are made of hard materials, such as cemented carbides provided with coatings to minimize wear. Compared to other coated cemented carbides, for example cutting tools, the dynamic mechanical seal surfaces typically face a very different wear scenario. The speed of rotation is often very high, the environment is often more aggressive and the temperature is high and/or the temperature gradient from inside the vessel and to outside can be high. The pressure is often very high as well. The dynamic mechanical seal is often lubricated and/or cooled during normal use, but has to withstand running dry for shorter periods, for example during a start-up procedure or during an unintended shut down. In addition, a dynamic mechanical seal failure could result in costly damage or even hazardous situations, making reliability and predictability of outermost importance. All these factors differentiate the dynamic mechanical seals from most other diamond coated parts and results in special requirements regarding the interface between the base material and the coating. For example, poor adhesion of the diamond coating will not have the potentially hazardous consequences in a tooling part as it would in a dynamic mechanical seal application since - in the tooling part - no sealing effect must be upheld. Therefore, the known problems with proper adhesion of diamond coatings to a tungsten carbide base body has so far prevented successful practical use in a dynamic mechanical seal. The three prior art patent documents below represent attempts to solve these problems:
US2013313785 discloses a method for avoiding poor adhesion of a diamond coating to a cemented carbide base body by providing a base body that is without any fissures or only comprises fissures that have a maximum longitudinal extension that is smaller than or equal to 5 µ m. It is claimed that in the absence of fissures or in the presence of only very small fissures on the surface and in the base body an adequate bond between the base body and the diamond layer can be ensured at every place.
US2010259011 discloses a base body consisting of a two-component material. This material comprises a carbide material such as SiC or WC, possibly together with incorporated Si or Ni parts between the individual carbide grains, and particulate portions or grains made of a suitable diamond material distributed on the cross-section of the base body. Preferably, this diamond material corresponds to that forming the coating. The second component, being a diamond material is claimed to ensure good adhesion of the crystalline diamond coating.
WO2005012592 discloses a composite article, for example wear part/seal, comprising: a substrate having a surface, and comprising a first phase comprising at least one ceramic material, and a second phase comprising at least one material having a higher adhesion to chemical vapour deposited diamond than the ceramic material; and a chemical vapour deposited diamond coating disposed on at least a portion of a surface of the substrate.

However, no successful applications have yet been implemented on the market in spite of the fact that it is now 13 years since the publication of the Riccardo Polini article mentioned above and even longer since the cited patent documents cited were published. Hence, there is a strong need to find a working practical solution for obtaining sufficiently good adhesion of diamond coatings to a tungsten carbide base body to be useful in a dynamic mechanical seal assembly

### SUMMARY

Recent developments primarily in chemical vapour deposition techniques have made it possible to provide crystalline diamond coating on cemented carbide base bodies at costs acceptable for industrial production. In many aspects attractive combinations of carbides and binder material display adhesion and/or mechanical stability problems for certain application, which has limited the use of diamond coatings. Such an application is within dynamic mechanical seals wherein the pressure, rotation speed and chemical environment put specific requirements on the adhesion.

The object of the invention is to provide a dynamic mechanical seal assembly that overcomes the drawbacks of prior art techniques. This is achieved by the dynamic mechanical seal assembly as defined in claim 1. Hence, the invention describes a dynamic mechanical seal assembly comprising a rotating seal ring and a static seal ring, arranged for mutual sealing abutment in a common sealing plane. The invention is especially characterized in that at least one of said rotating sealing ring and static sealing ring comprises a base body of a cemented tungsten carbide material having a crystalline diamond coating facing said common sealing plane.

In a well suited embodiment, both the rotating sealing ring and the static sealing ring comprise a base body of a cemented tungsten carbide material having a crystalline diamond coating facing said common sealing plane.

In a favourable embodiment of the invention, an intermediate bonding layer is arranged between the base body and the crystalline diamond coating, for facilitating bonding of the crystalline diamond coating to the cemented tungsten carbide material of the base body.

Typically, the cemented tungsten carbide material comprises at least one binder material and the intermediate bonding layer comprises the same cemented tungsten carbide and binder material as the base body. The intermediate bonding layer is at least partially depleted of binder material in order to facilitate bonding of the crystalline diamond coating to the cemented tungsten carbide material of the base body.

In a well-functioning embodiment of the invention, the thickness of the intermediate bonding layer is in the range of 0.1-5 µm, preferably in the range of 0.1-2 µm, and even more preferably in the range of 0.1-1 µm.

Typically, the thickness of the intermediate bonding layer is in the order of 10-20% of the thickness of the crystalline diamond coating.

Favourably, the thickness of the intermediate bonding layer is below half the average size of carbide particles in the cemented tungsten carbide of the base body.

In a favourable embodiment, the thickness of the intermediate bonding layer is below 25% of average size of carbide particles in the cemented tungsten carbide of the base body.

Favourably, the average binder content in the base body is in the range 6-10% by weight, and the average binder content in the intermediate bonding layer is in the range 0.5-10% by weight.

In an alternative embodiment of the invention, the base body exhibits one or more recesses facing the crystalline diamond coating, said recesses mechanically interlocking the crystalline diamond coating with the base body.

In another embodiment of the invention, the intermediate bonding layer exhibits one or more recesses facing the crystalline diamond coating, said recesses mechanically interlocking the crystalline diamond coating with the intermediate bonding layer.

In a preferred embodiment of the invention, the major part of the binder material is cobalt (Co), but it may also be Nickel (Ni).

The crystalline diamond coating described herein comprises to the major part crystalline diamond. A lesser portion of the diamond coating may by amorphous diamond. The diamond coating may also comprise unavoidable impurities, for example as residues from the production process.

It should be emphasized that the term "comprises/comprising" when used in this specification is taken to specify the presence of stated features, integers, steps or components but does not preclude the presence or addition of one or more other features, integers, steps, components or groups thereof.

### BRIEF DESCRIPTION OF THE DRAWINGS

These and other aspects, features and advantages of which embodiments of the invention are capable of will be apparent and elucidated from the following description of embodiments of the present invention, reference being made to the accompanying drawings, in which:
Figure 1 is a schematic perspective illustration of a dynamic mechanical seal assembly according to the invention. The rotating seal ring has been slightly raised from the common sealing plane for the sake of clarity and illustration;
Figure 2 is a schematic illustration of a cross-sectional cut through the dynamic mechanical seal assembly, and
Figure 3 is a schematic top view of recesses facing the crystalline diamond coating formed in the base body - or, alternatively, in the intermediate bonding layer.

### DETAILED DESCRIPTION OF EXAMPLE EMBODIMENTS OF THE INVENTION

Specific embodiments of the invention will now be described with reference to the accompanying drawings. This invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the embodiments illustrated in the accompanying drawings is not intended to be limiting of the invention. In the drawings, like numbers refer to like elements.

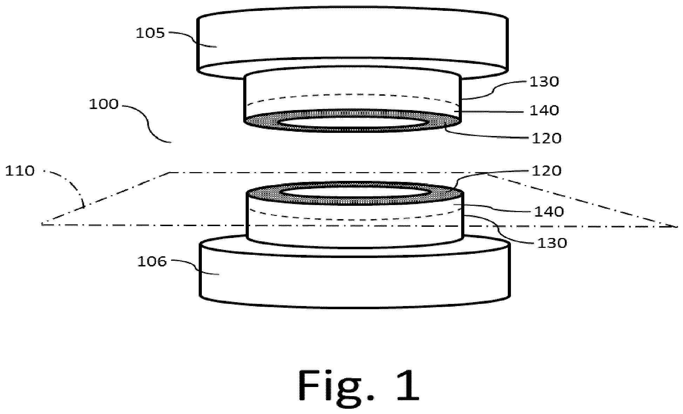

With initial reference to Fig. 1, this figure shows a schematic perspective illustration of a dynamic mechanical seal assembly 100 according to the invention. The rotating seal ring has been slightly raised from the common sealing plane for the sake of clarity and illustration1. The dynamic mechanical seal assembly 100 comprises a rotating seal ring 105 and a static seal ring 106, arranged for mutual sealing abutment in a common sealing plane 110 indicated with dash-dotted lines in the figure. The rotating seal ring 105 has been slightly raised from the common sealing plane 110 for the sake of clarity and illustration. At least one of said rotating sealing ring 105 and static sealing ring 106 comprises a base body 130 of a cemented tungsten carbide (WC) material having a crystalline diamond coating 120 facing the common sealing plane 110.

In an alternative embodiment of the invention, both the rotating sealing ring 105 and the static sealing ring 106 comprise a base body 130 of a cemented tungsten carbide (WC) material having a crystalline diamond coating 120 facing said common sealing plane 110 as shown in Fig. 1.

In the shown embodiment of the invention, an intermediate bonding layer 140 is arranged between the base body 130 and the crystalline diamond coating 120, for facilitating bonding of the crystalline diamond coating 120 to the cemented tungsten carbide material of the base body 130. The cemented tungsten carbide material comprises at least one binder material and the intermediate bonding layer 140 comprises the same cemented tungsten carbide and binder material as the base body 130. The intermediate bonding layer 140 being at least partially depleted of binder material in order to facilitate bonding of the crystalline diamond coating 120 to the cemented tungsten carbide material of the base body 130. The thickness of the intermediate bonding layer 140 is in the range of 0.1-5 µm, preferably in the range of 0.1-2 µm, and even more preferably in the range of 0.1-1 µm. Furthermore, the thickness of the intermediate bonding layer 140 is in the order of 10-20% of the thickness of the crystalline diamond coating 120.

Preferably, the thickness of the intermediate bonding layer 140 is below half the average size of carbide particles in the cemented tungsten carbide of the base body 130. Furthermore, the thickness of the intermediate bonding layer 140 is below 25% of average size of carbide particles in the cemented tungsten carbide of the base body 130.

The average binder content in the base body 130 is in the range 6-10% by weight, and the average binder content in the intermediate bonding layer 140 is in the range 0.5-10% by weight.

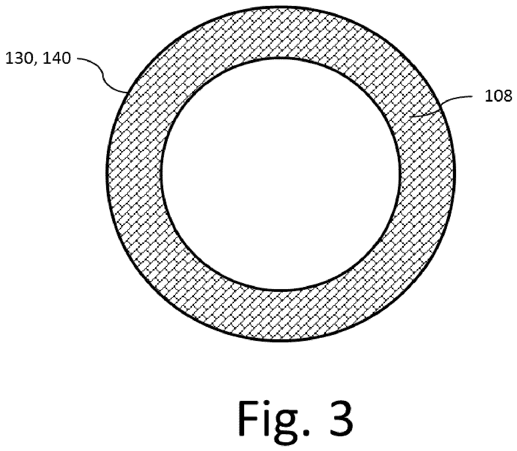

Fig. 3 is a schematic top view of recesses 108 facing the crystalline diamond coating 120 formed in the base body 130. These recesses 108 are formed so as to mechanically interlock the crystalline diamond coating 120 with the base body 130. The recesses 108 may be one or more in number and may form other patterns than the pattern shown in the figure. In an alternative embodiment, the intermediate bonding layer 140 exhibits similar recesses 108 facing the crystalline diamond coating 120, said recesses 108 mechanically interlocking the crystalline diamond coating 120 with the intermediate bonding layer 140.

Typically, during normal operation the rotating seal ring 105 and the static seal ring 106 are lubricated either by a liquid comprised in the sealed vessel, or by an additional lubricant. The lubricant forms a liquid film between the rotating seal ring 105 and the static seal ring 106. In many applications it is of high importance that the dynamic mechanical seal assembly 100 functions also if it runs dry of lubrication. This may occur for example when starting up or if the lubrication fails.

As appreciated by the skilled person the seal ring depicted in Fig. 1 represents a simplification of a real dynamical seal assembly 100. More complex geometries are common and the dynamical seal assembly 100 may comprise several parts, which are not necessarily of the same material.

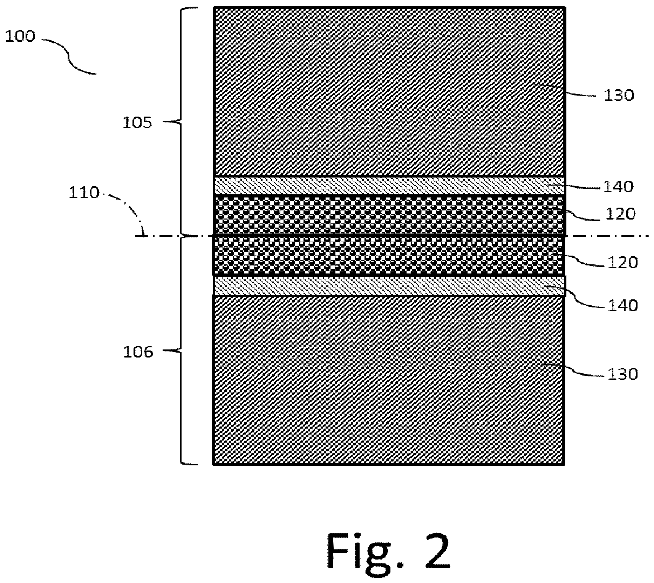

Fig. 2 is a schematic illustration of a cross-sectional cut through of the dynamical seal assembly 100 according to the present invention.

The binder material typically comprises, but is not limited to nickel (Ni), cobalt (CO), iron (Fe) and chromium (Cr) or combinations thereof. The base body 130 may comprise additional dopants commonly found in cemented carbides as well as unavoidable impurities. The binder content in the base body 130 is preferably in the range 6-10% by weight. The base body 130 is typically manufactured through a sintering process, for example hot isostatic pressing (HIP) optionally followed by grinding and/or polishing. A large number of manufacturers can provide cemented carbide articles of complex shapes and with a high degree of perfection with regards to tolerances and surface smoothness.

The crystalline diamond coating 120 comprises a major part of crystalline diamond, but may in addition have a lesser part of amorphous diamond. The crystalline diamond coating 120 has a thickness in the range 2-20 µm. The crystalline diamond coating 120 has preferably been provided by chemical vapor deposition (CVD) technique, for example but not limited to hot filament CVD, microwave plasma CVD or high frequency plasma CVD.

The intermediate bonding layer 140 is provided to increase the adhesion of the crystalline diamond coating 120 to the base body 130, utilizing the observation that it is the presence of a relatively high binder content close to the crystalline diamond coating interface that has a deteriorating effect on the adhesion of the crystalline diamond coating. The intermediate bonding layer 140 is preferably provided by an etching process taking place before providing the crystalline diamond coating with CVD. The choice of etching agent, strength, temperature, etching time etc. will depend primarily on the binder material. Common etching agents suitable for, for example cobalt and nickel include, but is not limited to aqueous solutions of either strong oxy-acids or hydrochloric acid. For the adhesion with the crystalline diamond coating 120 the binder content should be below a threshold, herein referred to as the adhesion threshold at the interface. The adhesion threshold will depend on the selection of carbides and/or the binder material. However a binder depletion reaching far into the base body 130 would deteriorate the mechanical properties of the material, typically result in a brittle region that would cause the base body to crack under pressure. According to the invention the intermediate bonding layer 140 should have thickness and degree of binder depletion so that a good adhesion with the crystalline diamond coating is ensured, that is a binder content at the interface below the adhesion threshold. At the same time the thickness of the intermediate bonding layer 140 should be thin enough to not cause embrittlement of the base body 130. The depth/thickness of the intermediate bonding layer 140 is in the range of 0.1-5 µm, preferably in the range of 0.1-2 µm, and even more preferably in the range of 0.1-1 µm. Mechanical strength and properties of the base material are thus preserved without affecting the base material.

According to one embodiment of the invention the thickness of the intermediate bonding layer 140 is in the order of 10-20% of the thickness of the crystalline diamond coating 120.

According to one embodiment of the invention the thickness of the intermediate bonding layer 140 is below half the average size of the carbide particles in the cemented carbide of the base body 130. Preferably the thickness is below 25% of average size of the carbide particles in the cemented carbide of the base body 130.

Of particular interest for seal applications are cemented carbides comprising tungsten carbides and binder comprising cobalt (Co). WC/Co cemented carbides are attractive due to hardness, surface smoothness and resistance to aggressive chemicals. However, WC/Co is particularly difficult to provide with a crystalline diamond coating that will adhere, as compared to for example SiC/Ni. According to one embodiment of the invention the major part of carbides of the cemented carbides of the base body 130 are tungsten carbides and the major part of the binder is cobalt (Co). According to another embodiment of the invention the major part of carbides of the cemented carbides of the base body 130 are tungsten carbides and the major part of the binder is Nickel (Ni).

As used herein, the singular forms "a", "an" and "the" are intended to include the plural forms as well, unless expressly stated otherwise. It will be further understood that the terms "includes," "comprises," "including" and/or "comprising," when used in this specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present. Furthermore, "connected" or "coupled" as used herein may include wirelessly connected or coupled. As used herein, the term "and/or" includes any and all combinations of one or more of the associated listed items.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

It is to be understood that the present invention is not limited to the embodiments described above and illustrated in the drawings and a skilled person will recognize that many changes and modifications may be made within the scope of the appended claims.

## Claims

1. A dynamic mechanical seal assembly (100) comprising a rotating seal ring (105) and a static seal ring (106), arranged for mutual sealing abutment in a common sealing plane (110), **characterized in that** at least one of said rotating sealing ring (105) and static sealing ring (106) comprises a base body (130) of a cemented tungsten carbide material having a crystalline diamond coating (120) facing said common sealing plane (110).

2. A dynamic mechanical seal assembly (100) according to claim 1, **characterized in that** both the rotating sealing ring (105) and the static sealing ring (106) comprise a base body (130) of a cemented tungsten carbide material having a crystalline diamond coating (120) facing said common sealing plane (110).

3. A dynamic mechanical seal assembly (100) according to claim 1 or 2, **characterized in that** an intermediate bonding layer (140) is arranged between the base body (130) and the crystalline diamond coating (120), for facilitating bonding of the crystalline diamond coating (120) to the cemented tungsten carbide material of the base body (130).

4. A dynamic mechanical seal assembly (100) according to claim 3, wherein the cemented tungsten carbide material comprises at least one binder material, **characterized in that** the intermediate bonding layer (140) comprises the same cemented tungsten carbide and binder material as the base body (130), said intermediate bonding layer (140) being at least partially depleted of binder material in order to facilitate bonding of the crystalline diamond coating (120) to the cemented tungsten carbide material of the base body (130).

5. A dynamic mechanical seal assembly (100) according to claim 4, **characterized in that** the thickness of the intermediate bonding layer (140) is in the range of 0.1-5 µm, preferably in the range of 0.1-2 µm, and even more preferably in the range of 0.1-1 µm.

6. A dynamic mechanical seal assembly (100) according to claim 4, **characterized in that** the thickness of the intermediate bonding layer (140) is in the order of 10-20% of the thickness of the crystalline diamond coating (120).

7. A dynamic mechanical seal assembly (100) according to claim 4, **characterized in that** the thickness of the intermediate bonding layer (140) is below half the average size of carbide particles in the cemented tungsten carbide of the base body (130).

8. A dynamic mechanical seal assembly (100) according to claim 4, **characterized in that** the thickness of the intermediate bonding layer (140) is below 25% of average size of carbide particles in the cemented tungsten carbide of the base body (130).

9. A dynamic mechanical seal assembly (100) according to claim 4, **characterized in that** the average binder content in the base body (130) is in the range 6-10% by weight, and the average binder content in the intermediate bonding layer (140) is in the range 0.5-10% by weight.

10. A dynamic mechanical seal assembly (100) according to claim 1 or 2, **characterized in that** the base body (130) exhibits one or more recesses (108) facing the crystalline diamond coating (120), said recesses (108) mechanically interlocking the crystalline diamond coating (120) with the base body (130).

11. A dynamic mechanical seal assembly (100) according to claim 3, **characterized in that** the intermediate bonding layer (140) exhibits one or more recesses (108) facing the crystalline diamond coating (120), said recesses (108) mechanically interlocking the crystalline diamond coating (120) with the intermediate bonding layer (140).

12. A dynamic mechanical seal assembly (100) according to any of the preceding claims, **characterized in that** the major part of the binder material is cobalt (Co).

13. A dynamic mechanical seal assembly (100) according to any of claims 1-11, **characterized in that** the major part of the binder material is nickel (Ni).
